# FASCICULE DE BREVET EUROPEEN

(11) **EP 3 889 683 B1**
(45) Date de publication et mention de la délivrance du brevet: **28.12.2022**
(21) Numéro de dépôt: 21165587.3
(22) Date de dépôt: 29.03.2021
(51) Int. Cl.: H04L 9/32, G03F 7/00, G06F 21/73, H01L 21/027, H01L 21/768, H01L 23/544, H01L 23/58, H01L 23/528, B82Y 40/00

(54) **PROCÉDÉ DE RÉALISATION D'UNE ZONE D'INDIVIDUALISATION D'UN CIRCUIT INTÉGRÉ**
VERFAHREN ZUR HERSTELLUNG EINER INDIVIDUALISIERTEN ZONE EINER INTEGRIERTEN SCHALTUNG
METHOD FOR MAKING A RANDOMISED ZONE OF AN INTEGRATED CIRCUIT

(30) Priorité: 30.03.2020 FR 2003110
(43) Date de publication de la demande: 06.10.2021
(73) Titulaire: Commissariat à l'Energie Atomique et aux Energies Alternatives, 75015 Paris (FR)
(72) Inventeur: TEYSSEDRE, Hubert, 38054 Grenoble (FR); LANDIS, Stefan, 38054 Grenoble (FR); MAY, Michaël, 38054 Grenoble (FR)
(74) Mandataire: Hautier, Nicolas

(56) Documents cités:
- US-A1- 2007 275 556
- US-A1- 2013 009 287
- US-A1- 2016 254 227
- US-A1- 2018 375 670

## Description

### DOMAINE TECHNIQUE

La présente invention concerne l'individualisation des circuits intégrés. Elle trouve pour application particulièrement avantageuse la protection de circuits intégrés, de composants ou de dispositifs intégrant de tels circuits.

### ETAT DE LA TECHNIQUE

L'individualisation d'un circuit intégré dans un composant permet l'identification unique de ce composant. Cela permet par exemple de protéger le composant contres des attaques par émulation des fonctions que le composant est sensé faire.

Afin d'identifier de manière unique un circuit intégré, il existe des solutions visant à utiliser les dispersions fonctionnelles inhérentes aux circuits intégrés. Les résistances des lignes d'interconnexion métallique ou des vias différent d'un circuit à l'autre, ce qui induit des chutes de tension le long du chemin emprunté par le signal électrique. Le temps de réponse des signaux diffère donc du fait de la variabilité induite sur les temps de propagation des signaux aux limites des contraintes électroniques du circuit, ou encore du fait de l'instabilité au démarrage des composants comme par exemple les mémoires SRAMS (acronyme de Static Random Access Memory signifiant mémoire vive statique) qui présentent un état unique à chaque démarrage.

Toutefois, ces solutions sont très sensibles aux variations environnementales ou au vieillissement. En particulier, des changements de températures, de tensions d'alimentation ou des interférences électromagnétiques peuvent affecter les performances de ces solutions en diminuant leur robustesse. Ainsi, les temps de réponse d'un circuit intégré peuvent évoluer dans le temps. Il en résulte qu'un circuit légitime peut éventuellement être déclaré comme étant contrefait.

D'autres solutions ont été proposées, par exemple dans les documents brevets suivants:

US2013/009287 divulgue un procédé de réalisation d'un circuit intégré comprenant une zone d'individualisation, dite PUF. Des motifs électriquement conducteurs sont transférés de manière aléatoire sur un niveau d'interconnexions dudit circuit intégré à partir des motifs en creux, formés dans une couche déformable.

US2018/375670 divulgue un procédé de réalisation d'un circuit intégré comprenant une zone d'individualisation comprenant des niveaux d'interconnexion où des motifs aléatoires sont formés sur un niveau de vias mis à nu afin de créer des court-circuits de manière aléatoire. Les motifs aléatoires peuvent être transférés dans un masque dur.

US2007/275556 divulgue un procédé de nano-lithographie par impression et plus particulièrement l'amélioration d'un tel procédé afin d'augmenter la fiabilité de ladite lithographie.

Il existe donc un besoin consistant à limiter, voire à résoudre, les problématiques des solutions connues.

### RESUME

Pour atteindre cet objectif, selon un mode de réalisation conforme à la revendication 1 annexée on prévoit un procédé de réalisation d'une zone d'individualisation sur un circuit intégré, le circuit intégré étant destiné à comprendre au moins :
- un premier et un deuxième niveaux des pistes électriques,
- un niveau d'interconnexions situées entre les premiers et deuxième niveaux des pistes électriques et comportant des vias destinées à connecter électriquement des pistes du premier niveau avec des pistes du deuxième niveau.

Le procédé comprenant au moins les étapes suivantes :
- fournir au moins le premier niveau des pistes électriques,
- déposer une couche diélectrique puis une couche déformable sur le niveau d'interconnexions,
- réaliser, dans une zone de la couche déformable destinée à comprendre la zone d'individualisation, des motifs, en creux, par pénétration d'un moule d'impression dans la couche déformable, la réalisation des motifs étant configurée de sorte que les motifs présentent un caractère aléatoire dans la couche déformable, formant ainsi des motifs aléatoires et que certains motifs aléatoires au moins s'étendent au droit d'au moins deux vias du niveau d'interconnexions,
- transférer dans la couche diélectrique les motifs aléatoires pour y former des motifs, désignés motifs aléatoires transférés, et mettre à nu les vias situées au droit des motifs aléatoires transférés,
- remplir les motifs aléatoires transférés avec un matériau électriquement conducteur de sorte à former des connexions électriques entre des vias,
- réaliser le deuxième niveau des pistes électriques sur les vias et les connexions électriques.

Ainsi, le procédé proposé permet de dégrader volontairement mais aléatoirement le niveau des vias en créant dans une zone définie de ce niveau des courts-circuits aléatoires entre les vias. Le diagramme de réponse du circuit intégré sera donc intimement lié à ce caractère aléatoire. Cette réponse sera par conséquent unique, formant alors pour le circuit intégré une zone d'individualisation. Chaque circuit intégré réalisé par ce procédé génère ainsi une réponse différente. Par ailleurs, le diagramme de réponse du circuit intégré sera stable dans le temps contrairement aux solutions décrites ci-dessus dans la section relative à l'état de la technique.

La zone d'individualisation est difficilement, voire n'est pas clonable physiquement. Elle peut être qualifiée par l'acronyme PUF (du vocable anglais Physically Unclonable Function). Il est donc possible de rendre unique le circuit intégré comportant cette zone d'individualisation.

Le procédé selon l'invention propose ainsi une solution fiable, que l'on peut aisément mettre en œuvre et à un cout réduit, afin de réaliser une zone d'individualisation d'un circuit intégré.

Selon un exemple, le procédé comprend au moins les étapes suivantes : fournir un moule présentant des reliefs initiaux ; réaliser un effondrement aléatoire des reliefs initiaux de sorte à former des reliefs aléatoires. Ainsi l'impression de ces reliefs aléatoires dans la couche déformable donnera un caractère aléatoire aux motifs imprimés dans la couche déformable.

De manière classique, le moule peut être obtenu par moulage d'une couche à partir d'un moule maître, habituellement qualifié de moule master ou master. Dans le cadre du développement de la présente invention, il a été constaté que chaque étape de moulage réalisée à partir du master est unique, au moins à l'échelle moléculaire.

En effet, le comportement des matériaux à l'interface entre le master et le moule en formation présente, pour un même motif du master, des variations entre deux réalisations successives de moules. Par exemple, la couche antiadhésive, recouvrant habituellement les reliefs portés par le master et qui vient directement au contact du matériau du moule, s'altère ou s'use à chaque moule fabriqué. Par exemple, la dimension critique d'un même motif du master et/ou la rugosité des parois d'un même motif du master varie entre deux étapes de moulage.

Deux moules fabriqués successivement à partir d'un même master présentent donc des motifs comportant des variations, même faibles.

Dans le cadre du développement de la présente invention, il a également été remarqué que ces variations ne sont pas maîtrisables et qu'elles sont aléatoires.

Par ailleurs, dans le domaine de la micro-électronique, il est connu que des motifs, en particulier des motifs de résine, peuvent s'effondrer. L'effondrement de motifs est une problématique que l'on cherche naturellement à éviter. Cette problématique est particulièrement prégnante lorsque l'on cherche à définir des motifs de petites dimensions. Certains paramètres, tels que la géométrie des motifs ou les matériaux de la couche, favorisent l'effondrement de ces motifs.

Dans le cadre du développement de la présente invention, il a été remarqué que les variations observées sur les reliefs de deux moules fabriqués à partir d'un même master impactent l'effondrement de ces reliefs.

Ainsi, le procédé proposé permet, de manière parfaitement contre-intuitive, de tirer profit de l'effondrement des reliefs d'un moule, alors que cet effondrement est habituellement combattu par tous les moyens. Par ailleurs, le procédé tire profit du fait que les reliefs de deux moules fabriqués à partir d'un même master présentent des variations qui donnent à cet effondrement un caractère aléatoire.

De manière particulièrement avantageuse, le procédé proposé permet ainsi d'obtenir, dans une couche déformable imprimée par un tel moule, des motifs aléatoires. La zone formée est ainsi unique et non reproductible physiquement à l'identique. Ces motifs aléatoires servent à former des courts-circuits entre des vias. La réponse du circuit intégré est donc fonction de ces courts-circuits répartis aléatoirement. Cette réponse est donc également aléatoire et permet de caractériser de manière unique le circuit intégré.

De manière facultative, le procédé de fabrication du moule peut en outre présenter au moins l'une quelconque des caractéristiques suivantes qui peuvent être prises séparément ou en combinaison:
Avant l'étape de fourniture d'un moule présentant des reliefs initiaux on effectue les étapes suivantes:
- fournir un master présentant des reliefs,
- faire pénétrer une couche de matériau déformable dans les reliefs du master pour y reproduire des reliefs initiaux, la couche de matériau déformable formant une partie au moins du moule présentant les reliefs initiaux.

Les reliefs initiaux présentent des paramètres choisis de sorte à favoriser le caractère aléatoire de l'effondrement, les paramètres étant pris au moins parmi: un rapport de forme des reliefs initiaux, une dimension critique des reliefs initiaux, un matériau constituant les reliefs initiaux, un module d'Young des reliefs initiaux, la température des reliefs initiaux. Par exemple, en modifiant la température on modifie le comportement des reliefs et donc leur tenue à l'effondrement.

Les reliefs du master sont recouverts d'une couche antiadhésive et l'étape de séparation du moule et du master est effectuée de sorte à ce que des molécules de la couche antiadhésive demeurent sur les reliefs du moule après séparation du moule et du master. Cela permet de considérablement favoriser l'effondrement aléatoire des motifs.

Pour réaliser l'effondrement aléatoire des reliefs initiaux, on fait pénétrer les reliefs dans une couche déformable.

Un autre aspect concerne un procédé de réalisation d'un dispositif microélectronique comportant au moins un circuit intégré, le circuit intégré comportant au moins:
- un premier et un deuxième niveaux des pistes électriques,
- un niveau d'interconnexions situées entre les premiers et deuxième niveaux des pistes électriques et comportant des via destinées à connecter électriquement des pistes du premier niveau avec des pistes du deuxième niveau
- une zone d'individualisation du circuit intégré.

La zone d'individualisation est réalisée en mettant en œuvre le procédé décrit précédemment, de préférence sur une partie seulement du circuit intégré.

Par dispositif microélectronique, on entend tout type de dispositif réalisé avec des moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS...). Il peut s'agir d'un dispositif destiné à assurer une fonction électronique, optique, mécanique etc. Il peut aussi s'agir d'un produit intermédiaire uniquement destiné à la réalisation d'un autre dispositif microélectronique.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente, de manière schématique et en perspective, un circuit intégré comprenant un premier et un deuxième niveaux des pistes électriques, ainsi qu'un niveau d'interconnexions comprenant des vias. Les vias connectent électriquement des pistes électriques du premier niveau avec des pistes électriques du deuxième niveau.
La figure 2A représente, de manière schématique et en vue du dessus, une zone fonctionnelle d'un circuit intégré, les pistes électriques du deuxième niveau étant représentées en transparence.
La figure 2B représente, de manière schématique et en vue du dessus, une zone d'individualisation d'un circuit intégré, la zone d'individualisation étant obtenue en mettant en œuvre un procédé selon l'invention. Les pistes électriques du deuxième niveau sont représentées en transparence. Un même circuit intégré peut comprendre les zones fonctionnelle et d'individualisation illustrées respectivement en figures 2A et 2B.
Les figures 3A à 3I illustrent des étapes d'un mode de réalisation d'un circuit intégré selon la présente invention.
Les figures 4A à 4D illustrent des étapes d'un exemple de réalisation d'un moule selon la présente invention.
La figure 5A est une photo d'un master.
La figure 5B est une photo d'une couche déformable portant des motifs aléatoires obtenus par impression nanométrique avec un moule réalisé, selon le procédé de l'invention et à partir du master illustré en figure 5A.
Les figures 6A à 6G illustrent des étapes d'un exemple de fabrication et d'utilisation, d'un moule pour nanoimpression, selon l'état de la technique.
Les figures 7A à 7G illustrent des étapes d'un exemple de fabrication et d'utilisation d'un moule pour nanoimpression, selon un premier exemple de réalisation de la présente invention.
Les figures 8A à 8G illustrent des étapes d'un exemple de fabrication et d'utilisation d'un moule pour nanoimpression, selon un deuxième exemple de réalisation de la présente invention.
La figure 9 est une photo d'une couche dans laquelle a été imprimée la face avant d'un moule portant des reliefs effondrés aléatoirement.
La figure 10 comporte plusieurs photos d'une couche déformable portant des motifs aléatoires, chaque photo correspondant à une densité de motifs et à une dimension critique de motif.
La figure 11 comporte plusieurs photos d'une couche déformable portant des motifs aléatoires, chaque photo correspondant à une densité de motifs et à une dimension critique de motif.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, sur les schémas de principe, les épaisseurs des différentes couches, vias, motifs et reliefs ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, les reliefs initiaux présentent un rapport de forme supérieur ou égal à 2 et de préférence supérieur ou égal à 5 et de préférence supérieur ou égal à 10.

Selon un exemple, le caractère aléatoire des motifs aléatoires porte sur au moins l'un parmi: une orientation principale de chaque motifs aléatoires dans un plan parallèle à une face avant de la couche déformable, une dimension des motifs aléatoires prise selon leur direction d'orientation principale, une dimension critique des motifs aléatoires.

Selon un exemple, ladite réalisation des motifs de sorte que les motifs présentent un caractère aléatoire dans la couche déformable, comprend les étapes suivantes :
- fournir ledit moule d'impression nanométrique, ledit moule présentant une face avant portant des reliefs initiaux,
- réaliser un effondrement aléatoire des reliefs initiaux de sorte à former des reliefs aléatoires,
- faire pénétrer la face avant du moule dans la couche déformable pour y laisser en place les motifs aléatoires.

Selon l'invention revendiquée, l'étape de réalisation de l'effondrement aléatoire des reliefs initiaux du moule étant réalisée avant et/ou pendant la pénétration de la face avant du moule dans la couche déformable.

Selon un exemple, l'étape de réalisation de l'effondrement aléatoire des reliefs initiaux du moule est réalisée, en partie au moins et de préférence uniquement, avant la pénétration du moule dans la couche déformable.

Selon un exemple, avant pénétration du moule dans la couche déformable, on trempe les reliefs initiaux dans un liquide. Cela permet de considérablement favoriser l'effondrement aléatoire des motifs.

Selon un autre exemple, l'étape de réalisation de l'effondrement aléatoire des reliefs initiaux du moule est réalisée, en partie au moins et de préférence uniquement, pendant la pénétration du moule dans la couche déformable. Selon un exemple, l'effondrement aléatoire des reliefs initiaux est obtenu par la pénétration des reliefs initiaux dans la couche déformable.

Selon un autre exemple, l'étape de réalisation de l'effondrement aléatoire des reliefs initiaux du moule est réalisée en partie avant la pénétration du moule dans la couche déformable et en partie pendant la pénétration du moule dans la couche déformable.

Selon un exemple, la réalisation des motifs aléatoires est effectuée dans une ou plusieurs zones seulement de la couche déformable, cette ou ces zones ne s'étendant pas sur toute la couche déformable. Ainsi, la zone d'individualisation ne s'étend pas sur toute la couche déformable. Elle ne s'étend pas sur, c'est-à-dire au droit de, toutes les pistes du premier niveau de pistes électriques. Ainsi, le premier niveau des pistes électriques est recouvert par la zone d'individualisation et par une autre zone, destinée à former une zone fonctionnelle pour le circuit intégré.

La réalisation des motifs aléatoires est effectuée uniquement dans l'au moins une zone d'individualisation. Le circuit intégré présente au moins une autre zone, distincte de la zone d'individualisation, de préférence destinée à former une zone fonctionnelle pour le circuit intégré. Cette autre zone présente une surface plus grande que la surface de la zone d'individualisation. Le premier et le deuxième niveaux de pistes électriques ainsi que le niveau d'interconnexion s'étendent dans ladite au moins une autre zone.

Il est précisé que, dans le cadre de la présente invention, le terme via regroupe toutes les connexions électriques tels que les plots, lignes et structures conductrices qui s'étendent, de préférence perpendiculairement, entre deux couches, successives ou non, du circuit intégré, soit entre deux niveaux de pistes électriques. Chaque niveau des pistes électriques s'étend principalement dans un plan et peut comporter des structures micromécaniques fonctionnelles telles que des transistors par exemple. De préférence les vias forment chacun un plot, de section sensiblement circulaire.

Dans le cadre de la présente invention, un via présente une dimension critique CDᵥᵢₐ, par exemple un diamètre, pris selon une coupe parallèle aux différents niveaux des pistes électriques intégrées. De préférence, CDᵥᵢₐ est inférieure à 50 µm. De préférence CDᵥᵢₐ est comprise entre 10 nm et 50 µm. De préférence CDᵥᵢₐ est comprise entre 10 nm et 10 µm.

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, le dépôt, le report, le collage, l'assemblage ou l'application d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

Une couche peut par ailleurs être composée de plusieurs sous-couches d'un même matériau ou de matériaux différents.

On entend par un substrat, un film, une couche, « à base » d'un matériau A, un substrat, un film, une couche comprenant ce matériau A uniquement ou ce matériau A et éventuellement d'autres matériaux, par exemple des éléments dopants.

L'expression « moule souple » regroupe les moules semi-souples et les moules entièrement souples. De manière générale, le module Young et l'épaisseur de chaque couche du moule souple sont configurés de manière à ce qu'un moule souple présente une souplesse suffisante en flexion pour permettre une élasticité permettant un pressage du moule par laminage.

Par exemple un moule souple peut à minima se déformer avec un rayon de courbure de 1m sans rupture. Selon un autre exemple, un moule entièrement souple se déforme sous l'effet de son propre poids. Ainsi, si un moule entièrement souple est maintenu par sa périphérie, on observe une flèche, de préférence supérieure à l'épaisseur du moule. Cette flèche étant causée par le seul poids du moule. Un moule semi-souple est plus rigide qu'un moule souple. Il présente généralement une feuille rigide formant un support. Néanmoins, il peut fléchir de manière élastique pour être laminé pour transférer ses motifs dans une couche imprimable.

Plusieurs modes de réalisation de l'invention mettant en œuvre des étapes successives du procédé de fabrication sont décrits ci-après. Sauf mention explicite, l'adjectif « successif » n'implique pas nécessairement, même si cela est généralement préféré, que les étapes se suivent immédiatement, des étapes intermédiaires pouvant les séparer.

Par ailleurs, le terme « étape » s'entend de la réalisation d'une partie du procédé, et peut désigner un ensemble de sous-étapes.

Par ailleurs, le terme « étape » ne signifie pas obligatoirement que les actions menées durant une étape soient simultanées ou immédiatement successives. Certaines actions d'une première étape peuvent notamment être suivies d'actions liées à une étape différente, et d'autres actions de la première étape peuvent être reprises ensuite. Ainsi, le terme étape ne s'entend pas forcément d'actions unitaires et inséparables dans le temps et dans l'enchaînement des phases du procédé.

Le mot « diélectrique » qualifie un matériau dont la conductivité électrique est suffisamment faible dans l'application donnée pour servir d'isolant. Dans la présente invention, un matériau diélectrique présente de préférence une constante diélectrique inférieure à 7.

On entend par « gravure sélective vis-à-vis de » ou « gravure présentant une sélectivité vis-à-vis de » une gravure configurée pour enlever un matériau A ou une couche A vis-à-vis d'un matériau B ou d'une couche B, et présentant une vitesse de gravure du matériau A supérieure à la vitesse de gravure du matériau B. La sélectivité est le rapport entre la vitesse de gravure du matériau A sur la vitesse de gravure du matériau B.

Dans le cadre de la présente invention, on qualifie de résine un matériau organique ou organo-minéral pouvant être mis en forme par une exposition à un faisceau d'électrons, de photons ou de rayons X ou mécaniquement.

On peut citer à titre d'exemple des résines classiquement employées en microélectronique, des résines à base de polystyrène (PS), de méthacrylate (par exemple le Polymethyl methacrylate PMMA), d'Hydrosilsesquioxane (HSQ), de polyhydroxystyrène (PHS) etc. L'intérêt d'utiliser une résine est qu'il est facile d'en déposer une épaisseur importante, de plusieurs centaines de nanomètres à plusieurs microns.

Il est précisé que dans le cadre de la présente invention, l'épaisseur d'une couche ou du substrat se mesure selon une direction perpendiculaire à la surface selon laquelle cette couche ou ce substrat présente son extension maximale. L'épaisseur est prise selon une direction perpendiculaire aux faces principales du substrat sur lequel reposent les différentes couches. Sur les figures, l'épaisseur est prise selon la verticale.

Un élément situé « à l'aplomb » ou « au droit d'» un autre élément signifie que ces deux éléments sont situés tous deux sur une même ligne perpendiculaire à un plan dans lequel s'étend principalement une face inférieure ou supérieure d'un substrat, c'est-à-dire sur une même ligne orientée verticalement sur les figures.

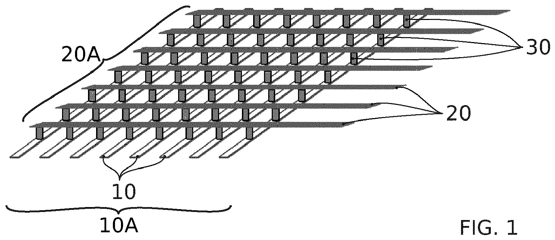

La figure 1 représente de manière schématique un circuit intégré classique comportant un premier niveau 10A des pistes électriques 10, et un deuxième niveau 20A des pistes électriques 20. Chacun de ces niveaux 10A, 20A s'étend principalement dans un plan. Ces plans sont sensiblement parallèles entre eux et à un substrat, non illustré, sur lequel reposent ces premier 10A et deuxième 20A niveaux des pistes électriques. Le circuit intégré comprend également un niveau d'interconnexions configuré pour connecter électriquement des pistes du premier niveau 10A avec des pistes du deuxième niveau 20A. Ce niveau d'interconnexions comprend des portions conductrices généralement qualifiées de vias 30. On notera que des vias 30 peuvent connecter des pistes de deux niveaux qui ne sont pas adjacents mais qui sont eux même séparés par un ou plusieurs autres niveaux.

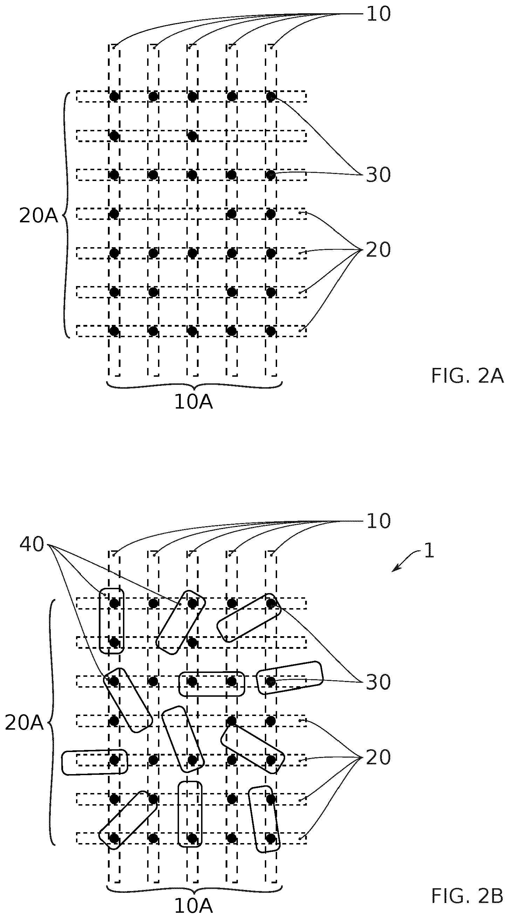

Une portion du circuit intégré forme au moins une zone fonctionnelle 2 illustrée en figure 2A et une autre portion du circuit intégré forme au moins une zone d'individualisation 1 illustrée en figure 2B.

La zone fonctionnelle 2 est destinée à assurer des fonctions logiques pour le fonctionnement attendu du circuit intégré. Outre les pistes électriques 10, 20, cette zone fonctionnelle 2 peut comprendre des structures micro-électronique, tel que par exemple des transistors, des diodes, des MEMS etc.

La zone d'individualisation 1, a quand elle pour fonction de rendre unique chaque circuit intégré. À cet effet, et comme cela sera détaillé par la suite, lors du procédé de fabrication, on prévoit de dégrader aléatoirement le niveau d'interconnexions comprenant les via 30. Plus précisément, on prévoit de créer de manière aléatoire des connexions électriques 40 entre les vias 30 pour mettre ces derniers en court-circuit entre eux. Le diagramme de réponse du circuit intégré est alors dépendant de la position de ces connexions électriques 40 créant des courts-circuits. La réponse de chaque circuit intégré sera donc différente. Chaque circuit intégré pourra donc être identifié de manière unique. La figure 2B, illustre le caractère aléatoire de ces connexions électriques 40. Sur cet exemple, ce caractère aléatoire porte sur l'orientation des connexions électriques 40 dans un plan parallèle aux plans des premier 10A et deuxième 20A niveaux de pistes électriques.

Selon un exemple de réalisation, le caractère aléatoire des connexions électriques 40 est obtenu en imprimant dans une couche déformable déposée sur les vias 30 des motifs aléatoires. Après avoir mis à nu les vias 30 situés au droit des motifs aléatoires, ces derniers sont remplis d'un matériau conducteur pour créer un court-circuit électrique. Selon un exemple de réalisation, les motifs aléatoires sont obtenus par impression de la couche déformable par un moule présentant des reliefs aléatoires. Le caractère aléatoire de ces reliefs du moule est obtenu par un effondrement aléatoire de reliefs initiaux portés par le moule. Comme on le verra par la suite dans la description détaillée qui va suivre, l'effondrement aléatoire des reliefs initiaux du moule peut être obtenue soit avant mise en contact du moule avec la couche déformable, soit au cours de l'impression du moule dans la couche déformable, soit à la fois avant mise en contact du moule avec la couche déformable et à la fois au cours de l'impression du moule dans la couche déformable.

Par effondrement d'un relief du moule, on entend un déplacement d'une partie distale du relief par rapport à la face avant du moule portant le relief. Par exemple il peut s'agir d'un déplacement d'une partie distale de ce relief alors qu'une partie proximale de ce relief, par laquelle le relief est lié à la base du moule, demeure en place. Cet effondrement peut mener à une pliure du relief, une cassure du relief, une inclinaison du relief, un couchage des reliefs sur une face avant du moule. Cet effondrement peut aussi mener à un couchage des reliefs sur une face avant du moule et sur les motifs voisins.

L'effondrement peut être causé par des forces électrostatiques, des forces électromagnétiques, des forces de champ proche. L'effondrement peut également être causé par les forces de capillarité.

De manière alternative, l'effondrement peut être causé par application d'une contrainte mécanique sur les reliefs. Cette contrainte peut par exemple résulter de la pénétration des reliefs dans un matériau, tel qu'une résine.

L'effondrement des motifs ne résulte pas, ou ne résulte pas uniquement, du fluage des motifs.

Le caractère aléatoire des reliefs aléatoires porte en particulier sur l'orientation principale de chaque relief aléatoires dans un plan parallèle à une face avant du moule. De manière alternative ou cumulée, le caractère aléatoire des reliefs aléatoires porte sur au moins l'un parmi :
- la forme des reliefs aléatoires ;
- une ou des dimensions des reliefs aléatoires, ces dimensions étant prises selon une direction principale d'orientation des reliefs aléatoire.

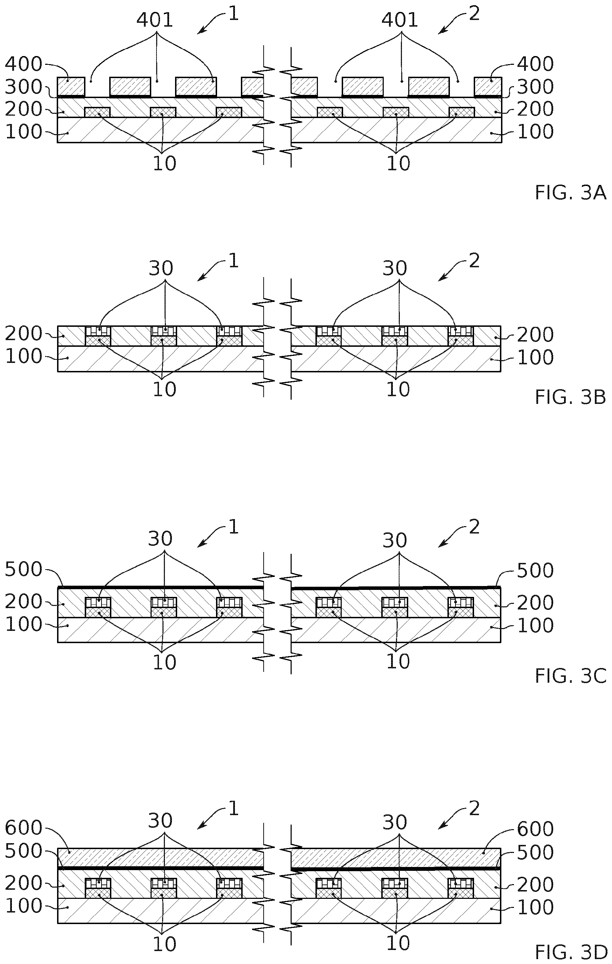

Un exemple non limitatif de réalisation d'un circuit intégré comportant une zone d'individualisation 1 et d'une zone fonctionnelle 2 va maintenant être décrit en détail en référence aux figures 3A à 3I.

La zone d'individualisation 1 peut être qualifiée de zone PUF et la zone fonctionnelle 2 peut être qualifiée de zone non-PUF.

L'exemple décrit ci-dessous s'intègre dans la fabrication de composés semi-conducteur au niveau du back end, c'est-à-dire lors de réalisation des niveaux d'interconnections électriques.

Les figures 3A illustrent une étape où l'on fournit une plaque, également désigné empilement, comportant une zone destinée à former une zone d'individualisation 1 et une zone destinée à former la zone fonctionnelle 2. Cet empilement comprend :
- une couche de support 100, faite d'un matériau diélectrique, par exemple un substrat diélectrique. Cette couche de support 100 est par exemple formée de SiO₂;
- le premier niveau 10A de pistes électriques 10. Ces pistes électriques 10 sont formées dans un matériau conducteur tel que le cuivre ;
- au moins une couche diélectrique 200 encapsulant le premier niveau 10A des pistes électriques 10. Cette couche diélectrique a également pour fonction de former une barrière contre la diffusion du cuivre. Cette couche diélectrique 200 est par exemple formée de SiO₂.

Optionnellement, l'empilement peut également comprendre un masque 300 présentant des ouvertures mettant à nu la couche diélectrique 200. De préférence, le masque 300 est un masque dur. Ce masque dur est par exemple formé d'un nitrure tel que le nitrure de silicium (SiN). Alternativement, ce masque dur 300 est par exemple formé d'un empilement d'au moins deux couches. Dans ce cas, le masque dur 300 peut comprendre une première couche disposée au contact ou au regard de la couche électrique 200 et une deuxième couche surmontant la première couche. Selon un exemple la première couche est un oxyde tel qu'un oxyde de silicium (SiO₂) et la deuxième couche est un nitrure tel que le nitrure de silicium (SiN). On peut qualifier ce masque de masque bicouche.

Le masque 300 est surmonté d'un masque 400 présentant des ouvertures 401. Ce sont ces ouvertures 401 du masque 400 qui servent à ouvrir le masque dur 300. Ces ouvertures dans les masques 300, 400 ont pour fonction de définir au cours d'une étape ultérieure, les vias 30. Les ouvertures 401 sont situées au droit des pistes électriques 10.

La nature du masque 400 dépend des techniques utilisées pour réaliser les ouvertures 401. La figure 3A illustre un masque 400 uniforme. Naturellement, ce masque 400, où la couche à partir de laquelle ce masque 400 est formé, peut être formée d'un empilement de couches. Par exemple, pour obtenir le masque 400, on peut déposer sur le masque dur 300, une couche comprenant deux couches de masque de gravure de type SOC (spin on carbon) et SiARC (silicon anti reflective coating signifiant revêtement anti réflexion à base de silicium), ainsi qu'une couche de résine photosensible. Les épaisseurs de ces trois couches varient selon la nature des produits employés ainsi que des dimensions des vias visées. Elles sont typiquement de l'ordre de 150 nm pour le SOC, 30 nm pour le SiARC et environ 100 nm pour la résine.

Alternativement, le masque 400 peut être formé à partir d'un simple empilement de résine comprenant une couche de résine et un revêtement de type BARC (Bottom Anti Reflective Coating signifiant revêtement anti-reflexion de fond).

De préférence, ces couches sont déposées par une méthode classique de spin coating (à la tournette).

Cet empilement, notamment le masque dur 300 et le masque de résine 400 sont réalisés en mettant en œuvre des techniques classiques de lithographie, telles que la lithographie optique, la lithographie électronique par faisceau d'électrons (ebeam), la lithographie par nanoimpression ou toute autre technique de lithographie connue de l'homme du métier.

Par exemple, pour réaliser par lithographie optique les ouvertures du masque 300, on peut insoler certaines zones du masque 400 de résine, puis, après développement, on obtient les ouvertures 401. Ces ouvertures 401 permettent ensuite de graver le masque dur 300 au droit des ouvertures 401.

Pour obtenir le résultat illustré en figure 3B, une gravure est effectuée dans la couche diélectrique 200 pour y transférer les motifs 401 du masque 400. Cette gravure est effectuée de sorte à retirer la couche diélectrique 200 située au droit des ouvertures 401 de sorte à mettre à nu les pistes électriques 10.

Une étape ultérieure consiste à former les vias 30 en remplissant avec un matériau électrique, par exemple du cuivre, les creux formés dans la couche électrique 200. Les vias 30 sont au contact des pistes électriques 10. Ainsi, le niveau d'interconnexions est réalisé.

Comme illustré en figure 3C, on dépose ensuite sur ce niveau d'interconnexions une nouvelle couche dont la fonction est de former une barrière à la diffusion du cuivre. Cette couche est par exemple faite de SiO₂. Sur la figure 3A, cette couche est illustrée comme assurant une continuité avec la couche électrique 200 et faisant partie de cette dernière. Naturellement, il peut s'agir de deux couches distinctes et présentant des natures différentes.

On dépose également un masque dur 500 de gravure. Ce masque dur est par exemple fait en SiN.

Comme illustré en figure 3D, l'étape suivante consiste à déposer une couche déformable 600, typiquement une résine. De préférence, cette couche déformable 600 est déposée pleine plaque. Elle recouvre aussi bien la portion de l'empilement destinée à former la zone d'individualisation 1 que la portion de l'empilement destiné à former la zone fonctionnelle 2.

Cette couche déformable 600 est destinée à être imprimée par un moule pour former des motifs aléatoires dans la portion destinée à former la zone d'individualisation 1. Cette couche déformable 600 peut être faite de l'une des résines compatibles avec une technologie d'impression assistée par ultraviolets (UV) ou assistée thermiquement. De préférence, cette résine est choisie de sorte à permettre de réaliser cette étape de lithographie à température ambiante et effectuer un alignement des motifs présents sur le moule par rapport aux niveaux déjà réalisés sur la plaque à imprimer. Ces résines sont bien connues de l'homme du métier

À ce stade, la zone d'individualisation 1 et la zone fonctionnelle 2 sont identiques. Les étapes de réalisation du circuit intégré sont identiques pour ces deux zones.

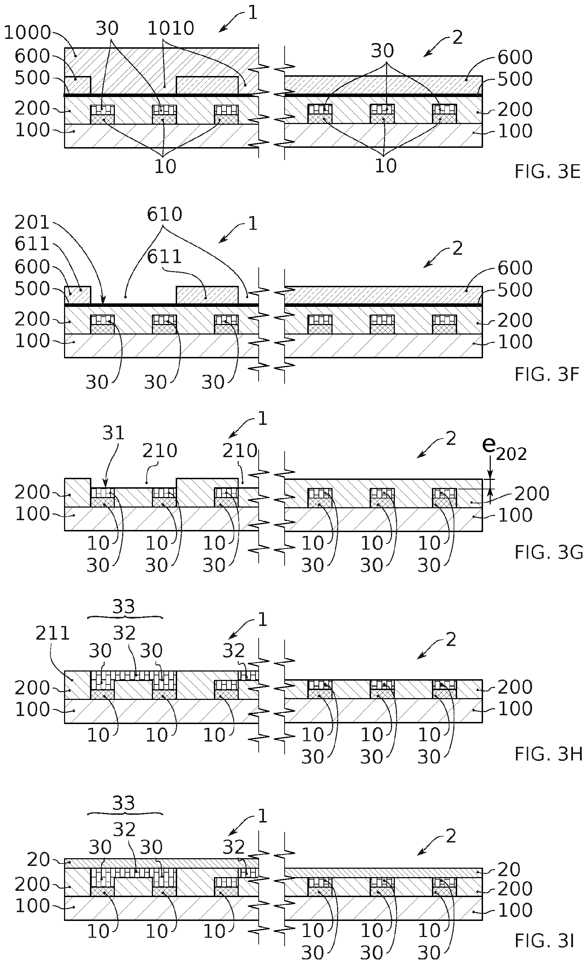

L'étape suivante, illustré en figure 3E, consiste à imprimer dans la couche déformable 600 les reliefs 1010 portés par le moule 1000. Il sera indiqué par la suite comment ces reliefs 1010 présentent dans la zone d'individualisation 1 un caractère aléatoire.

Ces reliefs 1010 présentent généralement une forme de nervure. Ils présentent ainsi une direction principale d'extension, dont la dimension correspond à la longueur du relief, cette longueur étant prise dans un plan parallèle à la face avant du moule 1000. Ils présentent également, une largeur, mesurée également dans un plan parallèle à la face avant du moule 1000 et selon une direction perpendiculaire à la longueur. Cette largeur correspond à la dimension critique CD₁₀₁₀ du relief 1010.

La figure 3E est une vue simplifiée ne faisant pas apparaître une éventuelle épaisseur résiduelle de la couche déformable 600 au niveau de l'extrémité des reliefs 1010 du moule 1000. Cette étape est effectuée de sorte à ce que dans la portion de la plaque destinée à former la zone fonctionnelle 2, le moule 1000 n'imprime pas de reliefs 1010, tout au moins pas de reliefs aléatoires. Sur l'exemple illustré en figure 3E, dans cette portion, le moule 1000 n'imprime aucun relief.

La figure 3F illustre l'étape consistant à retirer le moule 1000 de la couche déformable 600. À l'issue de ce retrait, la couche déformable 600 présente des motifs en creux 610 et des motifs en saillie 611. A l'issue d'une éventuelle étape visant retirer l'épaisseur résiduelle de la couche 600 au droit des reliefs 1010, la couche diélectrique 200 ou plus précisément le masque dur 500 est mis à nu au droit des motifs 610.

Les motifs 610 en creux sont fonction des reliefs aléatoires 1010 du moule 1000. Ces motifs 610 présentent donc chacun un caractère aléatoire.

Par ailleurs, le moule 1000 est configuré de sorte à ce qu'au moins certains des motifs aléatoires 610 s'étendent au droit d'au moins deux via 30.

Comme illustré en figure 3G, les motifs aléatoires 610 sont ensuite transférés dans le masque dur 500 et dans la couche diélectrique 200, permettant ainsi de mettre à nu une face supérieure 31 des via 30. Des motifs 210 sont alors formés dans la couche électrique 200. Tout comme les motifs 610a de la couche déformable 600, ces motifs 210 de la couche électrique 200 sont aléatoires. Naturellement, dans la zone fonctionnelle 2, les vias 30 restent masqués par la couche électrique 200. L'épaisseur de la couche diélectrique 200 recouvrant la face supérieure 31 des via est référencée e202 en figure 3G.

Comme illustré en figure 3H, les motifs 210 sont remplis par un matériau électriquement conducteur, par exemple du cuivre. Ce dépôt 32 de matériau électriquement conducteur est ensuite planarisé, par exemple par un polissage mécanochimique (CMP). Ce dépôt 32 de matériau électriquement conducteur, lorsqu'il contacte au moins deux vias 30, permet de former une connexion électrique 33 entre deux vias 30. Il forme alors un court-circuit entre les pistes électriques 10 au contact de ces vias 30. On remarque que la zone fonctionnelle 2 ne comporte pas de connexion électrique 33 entre deux vias 30, et donc pas de court-circuit aléatoire.

Comme illustré en figure 3I, on peut ensuite intégrer les niveaux supérieurs de manière classique. En particulier, on réalise le deuxième niveau 20A de pistes électriques 20.

Les paragraphes suivants décrivent un exemple pour obtenir des reliefs aléatoires 1010 sur le moule 1000 servant à former, par impression nanométrique, les motifs aléatoires 610 dans la couche déformable 600.

Cet exemple est basé sur la technologie de nano impression avec des moules souples. Pour ce faire on réalise au préalable un moule maître, habituellement qualifié de moule master et plus souvent de master. Ce master est avantageusement fabriqué en silicium avec des technologies bien connues de l'homme du métier. La période de ces réseaux n'est pas nécessairement identique à la période des réseaux de vias 30 déjà réalisés sur la plaque. Pour la figure 2B et dans un souci de simplification, la période choisie pour les structures conductrices 32 présentant des défauts est double de celle utilisée pour le niveau de vias 30.

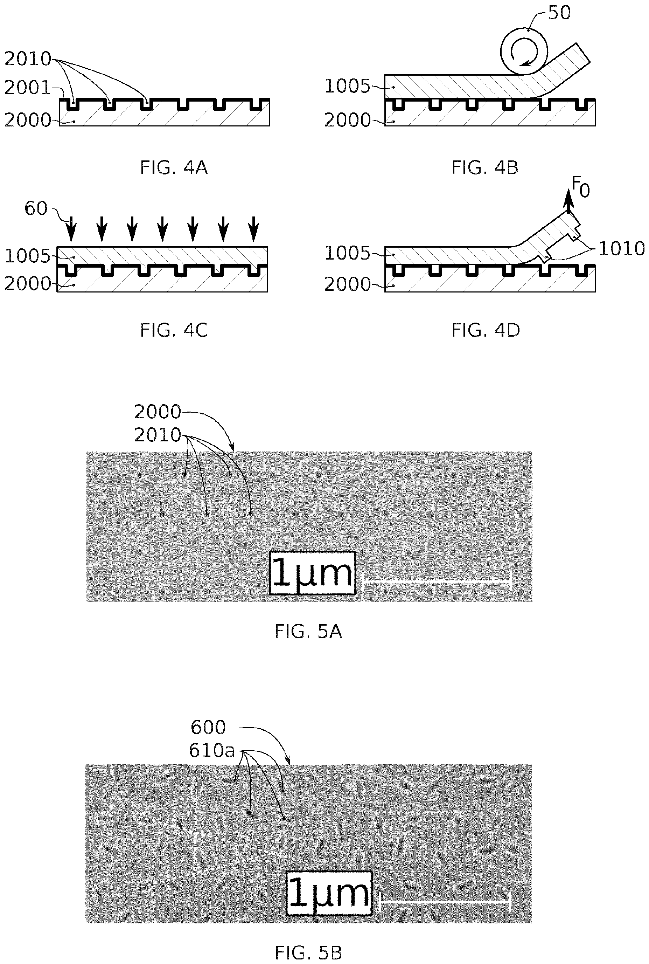

Les figures 4A à 4C illustrent, de manière très simplifiée, les principales étapes de réalisation d'un moule 1000 souple à partir d'un master 2000.

Comme illustré en figure 4A, le master 2000 présente une face avant portant des reliefs en creux 2010. Cette face avant est avantageusement recouverte d'une couche anti-adhésive 2001.

Comme illustré en figure 4B, les reliefs 2010 de cette face avant du master 2000 sont par la suite copiés dans une couche déformable 1005. Pour cela, on peut prévoir d'appliquer un procédé d'impression sur la couche déformable 1005. Selon un exemple, la couche de matériau déformable est laminée sur la face avant du master, par exemple à l'aide d'un rouleau 50. L'impression peut être assistée par UV ou thermiquement comme illustré par la référence 60 en figure 4C.

Alternativement, la couche déformable 1005 est déposée par centrifugation sur le master. Dans ce cas, la couche déformable 1005 peut présenter une épaisseur comprise entre quelques centaines de nanomètres à plusieurs microns.

Comme illustré en figure 4D, la couche déformable 1005 peut être retirée du master 2000, par exemple en lui appliquant une force de retrait F0. La couche déformable 1005 présente alors des reliefs 1010 sur sa face avant. La couche déformable 1005 est reportée sur une couche de support pour assurer son maintien mécanique mais également pour pourvoir l'utiliser en tant que moule dans une opération ultérieure d'impression. Le support est par exemple un film polymère dont l'épaisseur est comprise entre quelques dizaines de microns et plusieurs centaines de microns. Dans la suite de la description, le moule sera illustré comme étant monobloc alors que, naturellement, il peut présenter un empilement de couches, en particulier, la couche 1005 portant les reliefs 1010 et la couche de support. Dans la suite de la description, le moule porte la référence 1000, quelle que soit sa composition est le nombre de couches qui le composent.

Une fois extrait du master 2000, le moule souple 1000 est copié par impression dans une couche déformable 600 sur le substrat ou la plaque contenant déjà le réseau de vias 30 du niveau N-1, comme cela a été décrit en référence à la figure 3E. Toutefois contrairement un procédé d'impression mis en œuvre habituellement, dans lequel l'objectif est de reproduire le plus fidèlement les reliefs 2010 présents sur le master 2000 dans la couche déformable 600 à imprimer, dans le procédé proposé l'objectif est au contraire de générer des motifs 610 avec un caractère aléatoire, typiquement une orientation aléatoire. Ce caractère aléatoire est obtenu par un effondrement des reliefs 1010 du moule souple 1000, modifiant ainsi les géométries reproduites dans les couches 600 par rapport au design initial défini sur le master 2000.

La figure 5A est une photo de la face avant d'un master 2000 portant un réseau de trous 2010. La figure 5B est une photo des motifs 610 obtenus dans une couche déformable 600 par impression du moule fabriqué en utilisant le master 2000 de la figure 5A. Il ressort clairement de cette figure 5B, que les motifs 610 présentent une orientation parfaitement aléatoire. Cette orientation peut se caractériser par la direction principale d'extension de chacun des motifs 610 dans un plan parallèle au plan principal de la face supérieure de cette couche déformable 600 (c'est-à-dire dans un plan parallèle à celui de la feuille). Les orientations de trois motifs 610a sont représentées par une ligne blanche en pointillée sur la figure 5B. Il ressort clairement que ces orientations ne sont pas parallèles.

Avant de décrire en détail de modes de réalisation de moules permettant de former les motifs aléatoires 610 dans la couche déformable 600, quelques étapes d'un procédé classique de réalisation d'un moule de nanoimpression et de son utilisation vont maintenant être décrites brièvement.

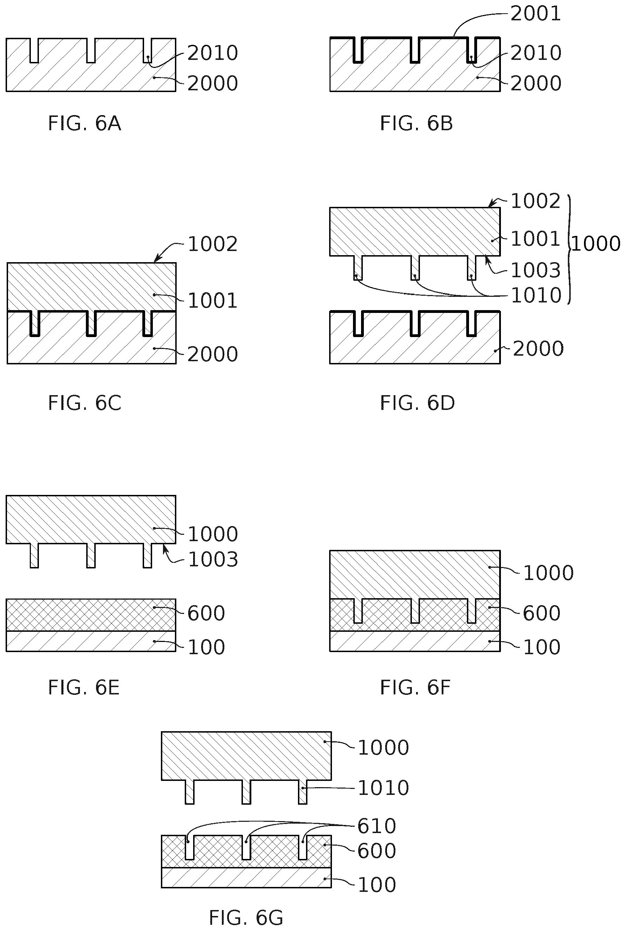

Les figures 6A à 6D illustrent la fabrication d'un moule 1000. La figure 6A illustre le master 2000 dont une face avant porte des reliefs 2010. La figure 6B illustre l'ajout au master 2000 d'une couche antiadhésive 2001 recouvrant les reliefs 2010. La figure 6C illustre la pénétration du matériau d'un moule souple dans les reliefs 2010 du master 2000. La figure 6D illustre la séparation du moule souple 1000 et du master 2000. Le moule souple 1000 présente alors une base 1001, une face arrière 1002, une face avant 1003 et les reliefs 1010 portés par la face avant 1003.

Les figures 6E à 6G illustrent des étapes d'utilisation du moule 1000 pour copier les motifs 2010 du master 2000 dans une couche déformable 600. En figure 6E, la face avant 1003 du moule 1000 est positionnée au droit de la couche déformable 600 reposant sur un substrat 100. La figure 6F illustre la pénétration du moule 1000 dans la couche déformable 600. La figure 6G illustre la séparation du moule 1000 et de la couche déformable 600, laissant dans cette dernière des motifs 610.

Dans ce procédé selon l'état de la technique, les motifs 610 obtenus dans la couche déformable 600 sont identiques ou le plus proche possible des reliefs 2010 du master 2000, l'objectif de tous les développements effectués en matière d'impression nanométrique étant d'avoir la plus forte similitude entre les motifs 610 de la couche déformable et les reliefs 2010 du master 2000.

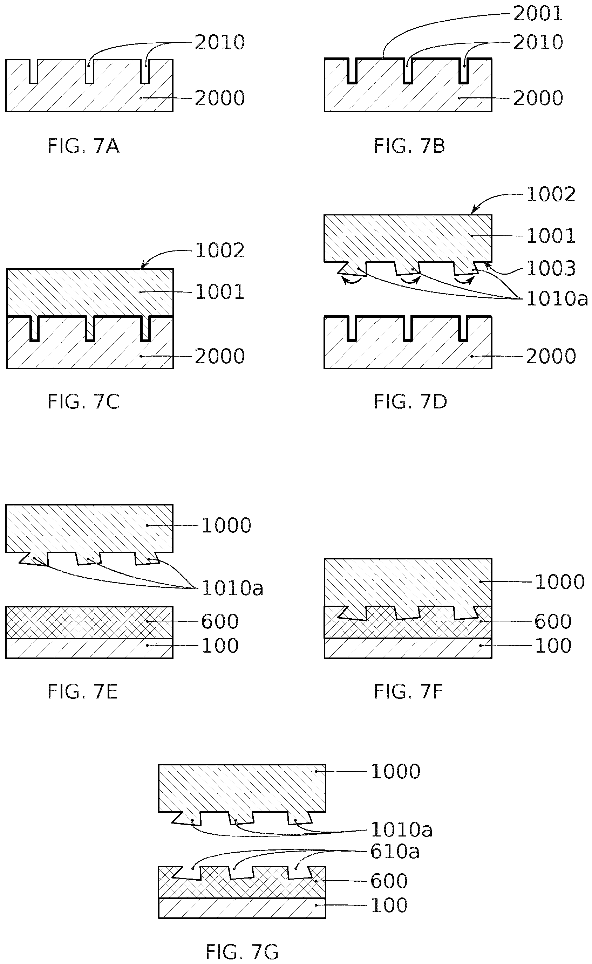

Une première réalisation d'un moule selon le procédé proposé va maintenant être décrite en détail en référence aux figures 7A à 7G. Le principe des étapes illustrées aux figures 7A à 7C est conforme aux étapes illustrées aux figures 6A à 6C décrites ci-dessus.

En revanche, les paramètres des reliefs 2010 du master 2000 sont choisis de sorte à ce qu'à l'issue du retrait du moule 1000 hors du master 2000, les reliefs du moule 1000 s'effondrent. Ces reliefs effondrés sont référencés 1010a en figure 7D.

L'effondrement de ces motifs 1010a est aléatoire. Ce mode de réalisation, dans lequel l'effondrement des motifs intervient après l'étape de moulage des reliefs du moule et avant l'étape d'impression du moule 1000 dans la couche déformable 600, présente pour avantage significatif qu'il favorise significativement le caractère aléatoire de cet effondrement.

On règle les paramètres des reliefs 210 du master 2000 de sorte à provoquer ou favoriser leur effondrement aléatoire. Ces paramètres sont notamment pris parmi :
- une dimension critique des reliefs 2010. Cette dimension critique est typiquement prise dans un plan perpendiculaire à la face avant du master 2000, c'est-à-dire dans un plan perpendiculaire à celui de la feuille. Cette dimension critique est par exemple le diamètre d'un motif 2010 formant un cylindre en creux. Alternativement, cette dimension critique peut être la largeur d'une tranchée en creux.
- un rapport de forme du relief 2010. Ce rapport de forme correspond au rapport de la profondeur du relief 2010 en creux du master 2000 sur la dimension critique du relief 2010 (tel que décrite au paragraphe ci-dessus). Plus le rapport de forme est élevé plus la probabilité d'effondrement est élevée.

Afin de favoriser l'effondrement aléatoire des motifs, on peut également jouer sur les paramètres suivants du moule 1000 souple.
- On privilégiera, pour le matériau formant le moule souple 1000, un module Young faible pour augmenter la probabilité l'effondrement.
- Par ailleurs, on privilégiera une adhérence élevée du matériau du moule 1000 souple avec lui-même. Cela favorise le caractère stable et pérenne de l'effondrement.
- On peut également régler la température du matériau du moule lors de son retrait du master 2000 afin de favoriser l'effondrement des motifs.

Afin de favoriser l'effondrement aléatoire des motifs, on peut également jouer sur de la couche antiadhésive 2001 recouvrant les reliefs 2010 du master 2000. Il est avantageux de choisir cette couche antiadhésive 2001, notamment sa nature, son épaisseur, sa compatibilité avec le matériau du moule 1000, sa température, de sorte à générer sur les parois du moule 1000 des forces de champ proche ou des tensions qui favorise l'effondrement des reliefs 1010. Ces forces et tensions sont dues aux molécules de la couche antiadhésive 2001 qui demeurent sur les reliefs 1010 du moule lors de la séparation du moule 1000 et du master 2000. Par ailleurs, lors de la séparation du moule 1000 et du master 2000 des forces électromagnétiques peuvent apparaître sur les reliefs 1010 du moule 1000.

Afin de favoriser l'effondrement aléatoire des motifs, on peut également jouer sur des étapes de traitement qui interviennent après séparation du moule 1000 et du master 2000. Par exemple, on peut prévoir de tremper le moule 1000 souple dans tout liquide compatible avec le matériau de ce moule. Cela permet de favoriser l'effondrement des reliefs 1010 par action des forces de capillarité qui interviennent lors des étapes subséquentes de séchage. On peut par exemple immerger le moule dans de l'eau et/ou de l'alcool ce qui favorise l'effondrement des reliefs. Par ailleurs, l'exposition des reliefs à de la vapeur d'eau provoque à elle seule ou favorise également leur effondrement.

Comme indiqué précédemment, les reliefs 1010a du moule 1000, après effondrement, présentent au moins un caractère aléatoire la surface de la plaque, ce caractère aléatoire étend pris parmi : l'orientation des reliefs 1010a, une ou des dimensions des reliefs 1010a, la forme des reliefs 1010a.

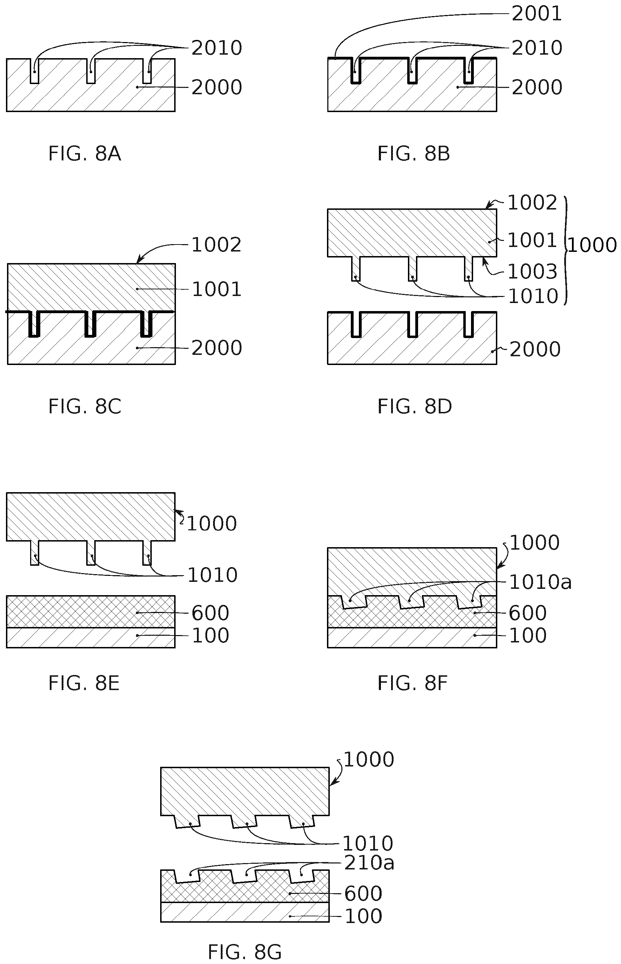

Le moule 1000 portant les reliefs aléatoires 1010a pénètre ensuite dans une couche déformable 600 (figures 7E et 7F). La couche déformable 600 surmonte un empilement, qui, par souci de concision est symbolisée par le substrat 100. Naturellement dans les modes de réalisation des figures 7 et 8, le substrat 100 peut comprendre un empilement de couches, tel que par exemple, mais de manière non limitative, l'empilement de couches illustrées en figure 3E et comprenant les couches et pistes 100, 200, 500, 10, 30.

Lorsque le moule 1000 est séparé de la couche déformable 600, il laisse en place dans cette dernière des motifs 610a aléatoires, correspondant aux reliefs aléatoires 1010a.

On notera que les motifs 610a formés dans la couche déformable 600 sont très différents des reliefs 2010 réalisés dans le master 2000. Le procédé d'impression selon la présente invention est donc en rupture radicale avec le principe et les objectifs habituels de la lithographie par impression.

Une deuxième réalisation d'un moule selon le procédé proposé va maintenant être décrite en détail en référence aux figures 8A à 8G. Le principe des étapes illustrées aux figures 8A à 8E est conforme aux étapes illustrées aux figures 6A à 6E décrites ci-dessus.

Dans ce mode de réalisation, la pénétration du moule 1000 dans la couche déformable 600 est effectuée de sorte à provoquer un effondrement des reliefs. Ces reliefs effondrés sont référencés 1010a en figure 8F. On notera que les motifs 610a formés dans la couche déformable 600 sont très différents des reliefs 2010 réalisés dans le master 2000.

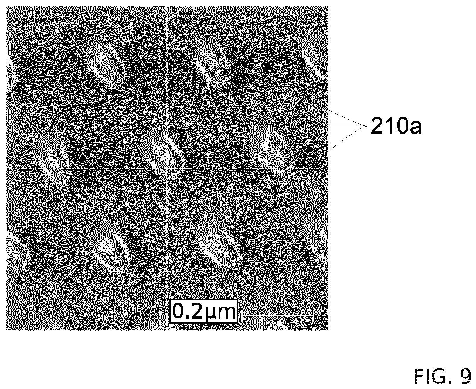

La figure 9 est une photo illustrant les motifs 210a obtenus dans une couche de résine après impression de cette couche par un moule portant des reliefs effondrés. Les reliefs du moule formaient, initialement et avant impression, des plots verticaux. Ces plots verticaux s'effondrent, pendant l'impression dans la couche déformable 600, en se couchant, de manière aléatoire.

Naturellement, on peut prévoir un mode de réalisation dans lequel une partie de l'effondrement aléatoire des reliefs du moule est effectuée avant pressage du moule 1000 dans la couche déformable 600 et dans lequel l'effondrement des reliefs se poursuit lors de la phase d'impression du moule 1000 dans la couche déformable 600. Ainsi, les modes de réalisation illustrée aux figures 7 et 8 peuvent se combiner au cours d'un même procédé.

Comme indiqué ci-dessus, la géométrie des reliefs 1010 du moule 1000, plus précisément leur rapport de forme est un paramètre important pour qu'intervienne leur effondrement aléatoire. On rappelle que le rapport de forme des reliefs du moule souple correspond au rapport entre la hauteur du relief (plot ou nervure) et sa dimension critique CD₁₀₁₀ prise dans un plan parallèle à la face avant du moule 1000 (diamètre du plot ou largeur de la nervure).

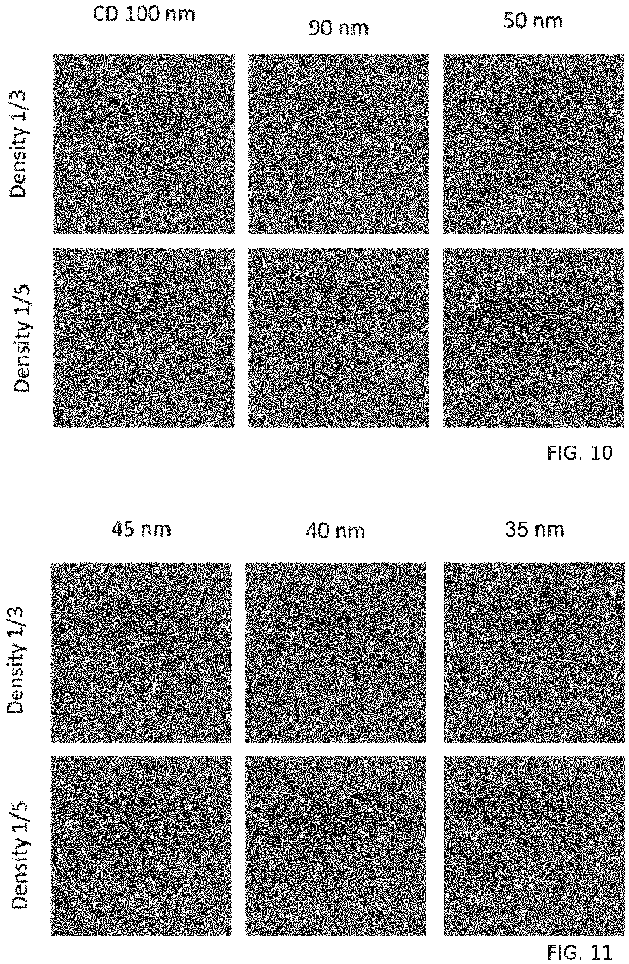

Les figures 10 et 11 illustrent l'impact du rapport de forme sur l'effondrement aléatoire des reliefs du moule. Plus ce rapport est élevé, plus l'effondrement aléatoire est facilité. La hauteur des reliefs, mesurée selon une direction perpendiculaire à la face du moule portant les reliefs, est, dans cet exemple, de 125 nm. La dimension critique des reliefs (par exemple leur section si la section est constante toute la hauteur du relief), mesurée selon une direction perpendiculaire à la hauteur est indiquée en figures 10 et 11. Cette dimension critique CD, prend, dans cet exemple, les valeurs suivantes en nanomètres : 100, 90, 50, 45, 40, 35. Dans certains cas les reliefs 1010 du moule se couchent jusqu'à se toucher entre plus proches voisins dans la résine imprimée. Cela est naturellement favorisé quand la densité des reliefs est plus importante.

Au vu de la description qui précède, il apparaît clairement que le procédé proposé offre une solution particulièrement efficace pour réaliser une zone d'individualisation de type PUF.

L'invention n'est pas limitée aux modes de réalisations précédemment décrits et s'étend à tous les modes de réalisation couverts par les revendications.

Le mode de réalisation décrit ci-dessus s'intègre dans la fabrication de composés semi-conducteur au niveau du back end dit « cuivre ». L'invention s'étend néanmoins à des modes de réalisation utilisant un autre matériau conducteur que le cuivre. Pour cela, l'homme du métier saura sans difficulté effectuer les adaptations nécessaires en termes de choix de matériaux et d'étapes de procéder.

## Revendications

1. Procédé de réalisation d'une zone d'individualisation (1) sur un circuit intégré, le circuit intégré étant destiné à comprendre au moins :
• un premier (10A) et un deuxième (20A) niveaux des pistes électriques (10, 20),
• un niveau d'interconnexions situées entre les premiers (10A) et deuxième (20A) niveaux des pistes électriques (10, 20) et comportant des vias (30) destinés à connecter électriquement des pistes électriques (10) du premier niveau (10A) avec des pistes électriques (20) du deuxième niveau (20B),
le procédé comprenant au moins les étapes suivantes :
• fournir au moins le premier niveau (10A) des pistes électriques (10), puis fournir le niveau d'interconnexions comprenant les vias (30),
• déposer une couche diélectrique (200) puis une couche déformable (600) sur le niveau d'interconnexions,
• réaliser, dans une zone de la couche déformable (600) destinée à comprendre la zone d'individualisation (1), des motifs, en creux, par pénétration d'un moule (1000) d'impression dans la couche déformable (600), la réalisation des motifs étant configurée de sorte que les motifs présentent un caractère aléatoire dans la couche déformable (600), formant ainsi des motifs aléatoires (610a) et qu'au moins certains motifs aléatoires (610a) s'étendent au droit d'au moins deux vias (30) du niveau d'interconnexions,
• transférer dans la couche diélectrique (200) les motifs aléatoires (610a) pour y former des motifs aléatoires transférés (210) et mettre à nu les vias (30) situées au droit des motifs aléatoires transférés (210),
• remplir les motifs aléatoires transférés (210) avec un matériau électriquement conducteur de sorte à former des connexions électriques entre des vias (30),
• réaliser le deuxième niveau (20B) des pistes électriques (20) sur les vias (30) et les connexions électriques,
et ladite réalisation des motifs (610a) de sorte que les motifs présentent un caractère aléatoire dans la couche déformable (600), comprend les étapes suivantes :
• fournir ledit moule (1000) d'impression, ledit moule (1000) présentant une face avant (1003) portant des reliefs initiaux (1010),
• réaliser un effondrement aléatoire des reliefs initiaux (1010) de sorte à former des reliefs aléatoires (1010a),
• faire pénétrer la face avant du moule (1000) dans la couche déformable (600) pour y laisser en place les motifs aléatoires (610a),
• l'étape de réalisation de l'effondrement aléatoire des reliefs initiaux (1010) du moule (1000) étant réalisée avant et/ou pendant la pénétration de la face avant (1003) du moule (1000) dans la couche déformable (600).

2. Procédé selon la revendication précédente dans lequel les reliefs initiaux (1010) présentent un rapport de forme supérieur ou égal à 2 et de préférence supérieure ou égale à 5.

3. Procédé selon l'une quelconque des revendications précédentes dans lequel l'étape de réalisation de l'effondrement aléatoire des reliefs initiaux (1010) du moule (1000) est réalisée, en partie au moins et de préférence uniquement, avant la pénétration du moule (1000) dans la couche déformable (600).

4. Procédé selon la revendication précédente dans lequel avant pénétration du moule (1000) dans la couche déformable (600), on trempe les reliefs initiaux (1010) dans un liquide.

5. Procédé selon l'une quelconque des revendications 1 ou 2, dans lequel l'étape de réalisation de l'effondrement aléatoire des reliefs initiaux (1010) du moule (1000) est réalisée, en partie au moins et de préférence uniquement, pendant la pénétration du moule (1000) dans la couche déformable (600).

6. Procédé selon la revendication précédente dans lequel l'effondrement aléatoire des reliefs initiaux (1010) est obtenu par la pénétration des reliefs initiaux (1010) dans la couche déformable (600).

7. Procédé selon l'une quelconque des revendications précédentes dans lequel l'étape de réalisation de l'effondrement aléatoire des reliefs initiaux (1010) du moule (1000) est réalisée en partie avant la pénétration du moule (1000) dans la couche déformable (600) et en partie pendant la pénétration du moule (1000) dans la couche déformable (600).

8. Procédé selon l'une quelconque des revendications précédentes dans lequel la réalisation des motifs aléatoires (610a) est effectuée uniquement dans l'au moins une zone d'individualisation (1), et le circuit intégré présente au moins une autre zone, distincte de la zone d'individualisation (1), de préférence destinée à former une zone fonctionnelle (2) pour le circuit intégré, le premier (10A) et le deuxième (20A) niveaux de pistes électriques (10, 20) ainsi que le niveau d'interconnexion s'étendant dans ladite au moins une autre zone.

9. Procédé selon la revendication 1, comprenant les étapes suivantes effectuées avant l'étape de fourniture du moule (1000) d'impression:
• fournir un master (2000) présentant des reliefs (2010),
• faire pénétrer une couche de matériau déformable dans les reliefs (2010) du master (2000) pour y reproduire les reliefs initiaux (1010) du moule (1000), la couche de matériau déformable formant une partie au moins du moule (1000) présentant les reliefs initiaux (1010),
• séparer le moule (1000) et le master (2000).

10. Procédé selon la revendication précédente dans lequel les reliefs initiaux (1010) présentent des paramètres choisis de sorte à favoriser le caractère aléatoire de l'effondrement, les paramètres étant pris parmi : un rapport de forme des reliefs initiaux (1010), une dimension critique des reliefs initiaux (1010), un matériau constituant les reliefs initiaux (1010), un module d'Young des reliefs initiaux (1010), la température des reliefs initiaux (1010).

11. Procédé selon l'une quelconque des deux revendications précédentes dans lequel les reliefs (2010) du master (2000) sont recouverts d'une couche antiadhésive (2001) et l'étape de séparation du moule (1000) et du master (2000) est effectuée de sorte à ce que des molécules de la couche antiadhésive (2001) demeurent sur les reliefs initiaux (1010) du moule (1000) après séparation du moule (1000) et du master (2000).

12. Procédé selon l'une quelconque des trois revendications précédentes dans lequel pour réaliser l'effondrement aléatoire des reliefs initiaux (1010), on fait pénétrer les reliefs initiaux (1010) du moule (1000) dans une couche déformable (600) ou dans un liquide.

13. Procédé de réalisation d'un dispositif microélectronique comportant au moins un circuit intégré, le circuit intégré comportant au moins:
• un premier (10A) et un deuxième (20A) niveaux des pistes électriques (10, 20),
• un niveau d'interconnexions situées entre les premiers (10A) et deuxième (20A) niveaux des pistes électriques et comportant des via (30) destinées à connecter électriquement des pistes (10) du premier niveau (10A) avec des pistes (20) du deuxième niveau (20A),
• une zone d'individualisation (1) réalisée en mettant en œuvre le procédé selon l'une quelconque des revendications 1 à 8 sur une partie seulement du circuit intégré
• une zone fonctionnelle (2) distincte de la zone d'individualisation (1) et comprenant des structures micro-électroniques prises parmi des transistors, des diodes, des MEMS ou des MOEMS.

## Patentansprüche

1. Verfahren zur Erstellung einer Individualisierungszone (1) auf einer integrierten Schaltung, wobei die integrierte Schaltung bestimmt ist, um mindestens zu umfassen:
• eine erste (10A) und eine zweite (20A) Ebene von elektrischen Bahnen (10, 20),
• eine Vernetzungsebene, die sich zwischen der ersten (10A) und der zweiten (20A) Ebene der elektrischen Bahnen (10, 20) befindet, und Vias (30) beinhaltet, die bestimmt sind, um elektrische Bahnen (10) der ersten Ebene (10A) mit elektrischen Bahnen (20) der zweiten Ebene (20B) elektrisch zu verbinden,
wobei das Verfahren mindestens die folgenden Schritte umfasst:
• Bereitstellen von mindestens der ersten Ebene (10A) der elektrischen Bahnen (10), und dann, Bereitstellen der Vernetzungsebene, die die Vias (30) umfasst,
• Aufbringen einer dielektrischen Schicht (200) und dann, einer verformbaren Schicht (600), auf die Vernetzungsebene,
• Erstellen, in einer Zone der verformbaren Schicht (600), die bestimmt ist, um die Individualisierungszone (1) zu umfassen, von Tiefenmustern, durch Einpressen einer Druckform (1000) in die verformbare Schicht (600), wobei die Erstellung der Muster so konfiguriert ist, dass die Muster in der verformbaren Schicht (600) einen zufälligen Charakter aufweisen, wodurch zufällige Muster (610a) gebildet werden, und dass sich mindestens einige zufällige Muster (610a) rechtwinklig zu mindestens zwei Vias (30) der Vernetzungsebene erstrecken,
• Übertragen der zufälligen Muster (610a) auf die dielektrische Schicht (200), um dort übertragene zufälligen Muster (210) zu bilden, und Entblößen der Vias (30), die sich rechtwinklig zu den übertragenen zufälligen Mustern (210) befinden,
• Füllen der übertragenen zufälligen Muster (210) mit einem elektrisch leitenden Material, um elektrische Verbindungen zwischen den Vias (30) zu bilden,
• Erstellen der zweiten Ebene (20B) der elektrischen Bahnen (20) auf den Vias (30) und den elektrischen Verbindungen,
und die Muster (610a) so erstellt werden, dass die Muster einen zufälligen Charakter in der verformbaren Schicht (600) aufweisen, die folgenden Schritte umfassend:
• Bereitstellen der Druckform (1000), wobei die Form (1000) eine Vorderseite (1003) aufweist, die ursprüngliche Reliefe (1010) trägt,
• Erstellen eines zufälligen Zusammenbruchs der ursprünglichen Reliefe (1010), um zufällige Reliefe (1010a) zu bilden,
• Einpressen der Vorderseite der Form (1000) in die verformbare Schicht (600), um dort die zufälligen Muster (610a) zu hinterlassen,
• wobei der Schritt zum Erstellen des zufälligen Zusammenbruchs der ursprünglichen Reliefe (1010) der Form (1000) vor und/oder während dem Einpressen der Vorderseite (1003) der Form (1000) in die verformbare Schicht (600) erstellt wird.

2. Verfahren nach dem vorhergehenden Anspruch, wobei die ursprünglichen Reliefe (1010) ein Seitenverhältnis größer oder gleich 2 und vorzugsweise größer oder gleich 5 aufweisen.

3. Verfahren nach einem der vorhergehenden Ansprüche, wobei der Schritt zum Erstellen des zufälligen Zusammenbruchs der ursprüngliches Reliefe (1010) der Form (1000) mindestens teilweise und vorzugsweise nur vor dem Einpressen der Form (1000) in die verformbare Schicht (600) erstellt wird.

4. Verfahren nach dem vorhergehenden Anspruch, wobei vor dem Einpressen der Form (1000) in die verformbare Schicht (600) die ursprünglichen Reliefe (1010) in eine Flüssigkeit getaucht werden.

5. Verfahren nach einem der Ansprüche 1 oder 2, wobei der Schritt zum Erstellen des zufälligen Zusammenbruchs der ursprünglichen Reliefe (1010) der Form (1000) mindestens teilweise und vorzugsweise nur während dem Einpressen der Form (1000) in die verformbare Schicht (600) erstellt wird.

6. Verfahren nach dem vorhergehenden Anspruch, wobei der zufällige Zusammenbruch der ursprünglichen Reliefe (1010) durch das Einpressen der ursprünglichen Reliefe (1010) in die verformbare Schicht (600) erreicht wird.

7. Verfahren nach einem der vorhergehenden Ansprüche, wobei der Schritt zum Erstellen des zufälligen Zusammenbruchs der ursprüngliches Reliefe (1010) der Form (1000) teilweise vor dem Einpressen der Form (1000) in die verformbare Schicht (600) und teilweise während dem Einpressen der Form (1000) in die verformbare Schicht (600) erstellt wird.

8. Verfahren nach einem der vorhergehenden Ansprüche, wobei die Erstellung der zufälligen Muster (610a) nur in der mindestens einen Individualisierungszone (1) durchgeführt wird, und die integrierte Schaltung mindestens eine weitere Zone aufweist, die sich von der Individualisierungszone (1) unterscheidet, vorzugsweise bestimmt, um eine funktionelle Zone (2) für die integrierte Schaltung zu bilden, wobei sich die erste (10A) und die zweite (20A) Ebene von elektrischen Bahnen (10, 20) sowie die Vernetzungsebene in die mindestens eine weitere Zone erstrecken.

9. Verfahren nach Anspruch 1, die folgenden Schritte umfassend, die vor dem Schritt zum Bereitstellen der Druckform (1000) durchgeführt werden:
• Bereitstellen eines Masters (2000), der Reliefe (2010) aufweist,
• Einpressen einer Schicht aus verformbarem Material in die Reliefe (2010) des Masters (2000), um dort die ursprünglichen Reliefe (1010) der Form (1000) zu reproduzieren, wobei die Schicht aus verformbarem Material mindestens einen Teil der Form (1000) bildet, die die ursprünglichen Reliefe (1010) aufweist,
• Trennen der Form (1000) und des Masters (2000).

10. Verfahren nach dem vorhergehenden Anspruch, wobei die ursprünglichen Reliefe (1010) Parameter aufweisen, die ausgesucht sind, um den zufälligen Charakter des Zusammenbruchs zu begünstigen, wobei die Parameter ausgewählt sind aus: Einem Seitenverhältnis der ursprünglichen Reliefe (1010), einer kritischen Abmessung der ursprünglichen Reliefe (1010), einem Material, das die ursprünglichen Reliefe (1010) formt, einem Youngscher Modul der ursprünglichen Reliefe (1010) und der Temperatur der ursprünglichen Reliefe (1010).

11. Verfahren nach einem der zwei vorhergehenden Ansprüche, wobei die Reliefe (2010) des Masters (2000) mit einer Antihaftschicht (2001) bedeckt sind, und der Schritt des Trennens der Form (1000) und des Masters (2000) so durchgeführt wird, dass Moleküle der Antihaftschicht (2001) nach dem Trennen der Form (1000) und des Masters (2000) auf den ursprünglichen Reliefen (1010) der Form (1000) verbleiben.

12. Verfahren nach einem der drei vorhergehenden Ansprüche, wobei zum Erstellen des zufälligen Zusammenbruchs der ursprünglichen Reliefe (1010) die ursprünglichen Reliefe (1010) der Form (1000) in eine verformbare Schicht (600) eingepresst werden oder in eine Flüssigkeit.

13. Verfahren zur Erstellung einer mikroelektronischen Vorrichtung, die mindestens eine integrierte Schaltung beinhalt, wobei die integrierte Schaltung mindestens beinhalt:
• eine erste (10A) und eine zweite (20A) Ebene von elektrischen Bahnen (10, 20),
• eine Vernetzungsebene, die sich zwischen der ersten (10A) und der zweiten (20A) Ebene der elektrischen Bahnen befindet, Vias (30) beinhaltend, die bestimmt sind, um Bahnen (10) der ersten Ebene (10A) mit Bahnen (20) der zweiten Ebene (20A) elektrisch zu verbinden,
• eine Individualisierungszone (1), die durch die Ausführung des Verfahrens nach einem der Ansprüche 1 bis 8 an nur einem Teil der integrierten Schaltung erstellt wird,
• eine funktionelle Zone (2), die sich von der Individualisierungszone (1) unterscheidet, und mikroelektronische Strukturen umfasst, die aus Transistoren, Dioden, MEMS oder MOEMS ausgewählt sind.

## Claims

1. A method for making a randomised zone (1) on an integrated circuit, the integrated circuit being intended to comprise at least:
• a first (10A) and a second (20A) level of the electrical tracks (10, 20),
• an interconnection level located between the first (10A) and second (20A) levels of the electrical tracks (10, 20) and including vias (30) intended to electrically connect the electrical tracks (10) of the first level (10A) with electrical tracks (20) of the second level (20B),
the method comprising at least the following steps:
• provide at least the first level (10A) of the electrical tracks (10), then provide the interconnection level comprising the vias (30),
• deposit a dielectric layer (200) then a deformable layer (600) over the interconnection level,
• make, in a zone of the deformable layer (600) intended to comprise the randomised zone (1), recessed patterns, by penetration of a printing mould (1000) into the deformable layer (600), making of the patterns being configured so that the patterns feature a random nature in the deformable layer (600), thus forming random patterns (610a) and that at least some random patterns (610a) extend in line with at least two vias (30) of the interconnection level,
• transfer the random patterns (610a) into the dielectric layer (200) to form transferred random patterns (210) therein and expose the vias (30) located in line with the transferred random patterns (210),
• fill the transferred random patterns (210) with an electrically-conductive material so as to form electrical connections between vias (30),
• make the second level (20B) of the electrical tracks (20) over the vias (30) and the electrical connections,
and said making of the patterns (610a) so that the patterns feature a random nature in the deformable layer (600), comprises the following steps:
• provide said printing mould (1000), said mould (1000) having a front face (1003) carrying initial reliefs (1010),
• achieve a random collapse of the initial reliefs (1010) so as to form random reliefs (1010a),
• make the front face of the mould (1000) penetrate into the deformable layer (600) to leave the random patterns (610a) therein,
• the step of achieving the random collapse of the initial reliefs (1010) of the mould (1000) being carried out before and/or during the penetration of the front face (1003) of the mould (1000) into the deformable layer (600).

2. The method according to the preceding claim, wherein the initial reliefs (1010) have a shape ratio greater than or equal to 2 and preferably greater than or equal to 5.

3. The method according to any one of the preceding claims, wherein the step of achieving the random collapse of the initial reliefs (1010) of the mould (1000) is carried out, at least in part and preferably only, before the penetration of the mould (1000) into the deformable layer (600).

4. The method according to the preceding claim, wherein, before penetration of the mould (1000) into the deformable layer (600), the initial reliefs (1010) are soaked in a liquid.

5. The method according to any one of claims 1 or 2, wherein the step of achieving the random collapse of the initial reliefs (1010) of the mould (1000) is carried out, at least in part and preferably only, during the penetration of the mould (1000) into the deformable layer (600).

6. The method according to the preceding claim, wherein the random collapse of the initial reliefs (1010) is obtained by the penetration of the initial reliefs (1010) into the deformable layer (600).

7. The method according to any one of the preceding claims, wherein the step of achieving the random collapse of the initial reliefs (1010) of the mould (1000) is carried out in part before the penetration of the mould (1000) into the deformable layer (600) and in part during the penetration of the mould (1000) into the deformable layer (600).

8. The method according to any one of the preceding claims, wherein making of the random patterns (610a) is performed only in the at least one randomised zone (1), and the integrated circuit has at least one other zone, distinct from the randomised zone (1), preferably intended to form a functional zone (2) for the integrated circuit, the first (10A) and the second (20A) levels of electrical tracks (10, 20) as well as the interconnection level extending into said at least one other zone.

9. The method according to claim 1, comprising the following steps performed before the step of providing the printing mould (1000):
• provide a master (2000) having reliefs (2010),
• make a deformable material layer penetrate into the reliefs (2010) of the master (2000) in order to replicate the initial reliefs (1010) of the mould (1000) therein, the deformable material layer forming at least one portion of the mould (1000) having the initial reliefs (1010),
• separate the mould (1000) and the master (2000).

10. The method according to the preceding claim, wherein the initial reliefs (1010) have parameters selected so as to promote the random nature of the collapse, the parameters being selected from among: a shape ratio of the initial reliefs (1010), a critical dimension of the initial reliefs (1010), a material forming the initial reliefs (1010), a Young's modulus of the initial reliefs (1010), the temperature of the initial reliefs (1010).

11. The method according to any one of the preceding two claims, wherein the reliefs (2010) of the master (2000) are covered with an anti-adhesive layer (2001) and the step of separating the mould (1000) and the master (2000) is performed so that molecules of the anti-adhesive layer (2001) remain over the initial reliefs (1010) of the mould (1000) after separation of the mould (1000) and the master (2000).

12. The method according to any one of the preceding three claims, wherein to achieve the random collapse of the initial reliefs (1010), the initial reliefs (1010) of the mould (1000) are penetrated into a deformable layer (600) or into a liquid.

13. A method for making a microelectronic device including at least one integrated circuit, the integrated circuit including at least:
• a first (10A) and a second (20A) level of the electrical tracks (10, 20),
• an interconnection level located between the first (10A) and second (20A) levels of the electrical tracks and including vias (30) intended to electrically connect tracks (10) of the first level (10A) with tracks (20) the second level (20A),
• a randomised zone (1) made by implementing the method according to any one of claims 1 to 8 on only part of the integrated circuit,
• a functional zone (2) distinct from the randomised zone (1) and comprising microelectronic structures selected from among transistors, diodes, MEMSs or MOEMSs.
